# EUROPÄISCHE PATENTANMELDUNG

(11) **EP 1 266 709 A1**
(43) Veröffentlichungstag der Anmeldung: **18.12.2002**
(21) Anmeldenummer: 02010982.3
(22) Anmeldetag: 17.05.2002
(51) Int. Cl.: B23B 27/10, B23Q 11/10

(54) **Werkzeug**

(30) Priorität: 15.06.2001 DE 10128816
(71) Anmelder: MAPAL Fabrik für Präzisionswerkzeuge Dr. Kress KG, D-73431 Aalen (DE)
(72) Erfinder:
(74) Vertreter: Gleiss, Alf-Olav, Dr.jur. Dipl.-Ing.

(57) **Zusammenfassung**

Es wird ein Werkzeug mit einem Werkzeugeinsatz (53) zur spanenden Bearbeitung von Werkstücken, mit einer für den manuellen Werkzeugwechsel ausgelegten Spannpatrone (2) zum Festspannen des Werkzeugeinsatzes (53) in einer Werkzeugspindel (89), mit mindestens einem das Werkzeug (1), insbesondere die Spannpatrone (2) im Wesentlichen in axialer Richtung durchdringenden Kanal für Medien, insbesondere für Kühl- und/oder Spül- und/oder Schmiermittel vorgeschlagen. Dieses zeichnet sich dadurch aus, dass ein von einem ersten Kanal (5) getrennter, im Wesentlichen in axialer Richtung verlaufender zweiter Kanal (7;7') für Medien, insbesondere für Kühlund/oder Spül- und/oder Schmiermittel in der Spannpatrone (2) vorgesehen ist, und dass in den Kanälen (5) und (7;7') unterschiedliche Medien führbar sind und diese in einer Mischvorrichtung (85) münden.

## Beschreibung

Die Erfindung betrifft ein Werkzeug zur spanenden Bearbeitung von Werkstücken gemäß Oberbegriff des Anspruchs 1.

Werkzeuge der hier angesprochenen Art sind bekannt. Sie werden unter anderem in Verbindung mit Werkzeugmaschinen eingesetzt, bei denen insbesondere mittels einer Spannpatrone ein Werkzeugeinsatz manuell festspann und wechselbar ist und bei denen ein Kühl-/Schmiermittel vorzugsweise innerhalb des Werkzeugs geführt wird. Zur Durchleitung des Kühl-/Schmiermittels ist innerhalb des Werkzeugs ein im Wesentlichen in axialer Richtung verlaufender Kanal vorgesehen. Diese Werkzeuge werden auch mit der MMS-Technologie (Minimal-Mengen-Schmierung) betrieben. Hierzu wird durch den Kanal in der Regel ein Luft/Öl-Gemisch durch das Werkzeug bis an den Wirkort, die Schneide, hindurchgeleitet. Dieses wird durch Vernebelung hergestellt und durch den Kanal an den Wirkort geführt. Es hat sich gezeigt, dass bei Werkzeugen der gattungsgemäßen Art aufgrund der Länge des Kanals und aufgrund von Richtungsänderungen des Kanals eine unerwünschte Entmischung beziehungsweise Versackung des Luft/Öl-Gemisches auftritt.

Es ist daher Aufgabe der Erfindung, ein Werkzeug bereitzustellen, das sich dadurch auszeichnet, dass insbesondere bei Einsatz von MMS-Technologie, eine unerwünschte Entmischung und ein Versacken bei Betrieb des Werkzeugs weitestgehend verhindert wird.

Zur Lösung dieser Aufgabe wird ein Werkzeug vorgeschlagen, das die in Anspruch 1 genannten Merkmale umfasst. Es zeichnet sich dadurch aus, dass in der Spannpatrone ein von einem ersten Kanal getrennter, im Wesentlichen in axialer Richtung verlaufender zweiter Kanal vorgesehen ist. In den Kanälen, die in einer Misch- und Verwirbelungskammer münden, sind unterschiedliche Medien führbar. Dies hat den Vorteil, dass die Medien getrennt durch die Spannpatrone führbar sind und folglich der Entstehungsort eines Gemisches in Stromrichtung gesehen, näher am Wirkort, also an der Schneide liegt. Ein Entmischen beziehungsweise Versacken auf dem kurzen Weg von der Mischkammer zum Wirkort ist praktisch ganz ausgeschlossen.

Ein bevorzugtes Ausführungsbeispiel des Werkzeugs zeichnet sich dadurch aus, dass der zweite Kanal auch im Werkzeugeinsatz weitergeführt wird. Damit ist gewährleistet, dass das Gemisch aus den unterschiedlichen Medien in nächster Nähe der Schneide hergestellt werden kann und damit jegliche unerwünschte Entmischung vor dem Wirksamwerden des Gemisches ausgeschlossen ist.

Ein weiteres bevorzugtes Ausführungsbeispiel des Werkzeuges zeichnet sich dadurch aus, dass das Weiterführen der Kanäle über die Schnittstellen Werkzeugaufnahme-Spannpatrone und/oder Spannpatrone-Werkzeugeinsatz mittels vorzugsweise zentrisch angeordneten Zapfen und/oder umlaufenden Ringnuten realisiert wird. Dies ermöglicht ein Durchführen von zwei Kanälen über die Schnittstellen der im nicht fixierten Zustand gegeneinander verdrehbaren Werkzeugteile.

Weitere Vorteile ergeben sich aus den übrigen Unteransprüchen.

Die Erfindung wird im Folgenden anhand der Zeichnungen näher erläutert. Es zeigen:
- Figur 1: einen Längsschnitt durch einen Teil des Werkzeugs, nämlich durch eine Spannpatrone mit zwei Fluidkanälen;
- Figur 2: einen Längsschnitt durch die Spannpatrone mit einem modifizierten Kanal;
- Figur 3: einen Längsschnitt durch einen Teil eines Werkzeugeinsatzes;
- Figur 4: eine Mischvorrichtung mit Mischkammer im Längsschnitt und
- Figur 5: einen Längsschnitt durch eine Werkzeugspindel, eine Spannpatrone und einen Werkzeugeinsatz im demontierten Zustand.

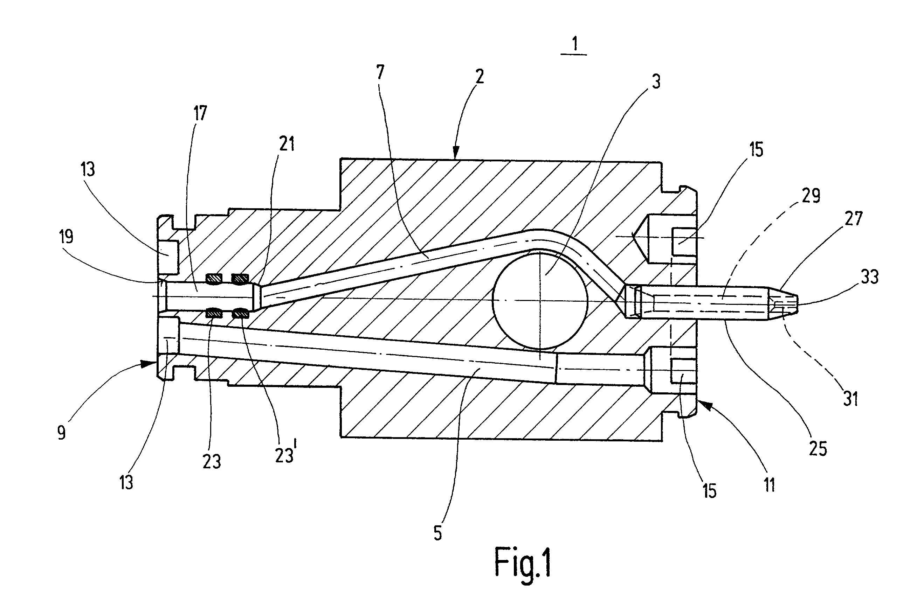

Das im Folgenden erläuterte Werkzeug 1 umfasst einen Werkzeugeinsatz und eine Spannpatrone 2, die in Figur 1 im Längsschnitt wiedergegeben ist. Mittels der Spannpatrone 2 ist der Werkzeugeinsatz manuell mit einer Werkzeugspindel verspannbar. Die Spannpatrone 2 weist eine hier nicht dargestellte Spannvorrichtung zum Verspannen des Werkzeugeinsatzes mit der Werkzeugspindel auf. Diese umfasst im Wesentlichen zwei Spannbacken, die vor beziehungsweise hinter der Bildebene liegen und eine Rechts-Links-Schraube, die in einer senkrecht zur Bildebene verlaufenden Bohrung 3 geführt wird. Die Rechts-Links-Schraube dient dazu die Spannbacken radial nach innen und außen zu führen. Mittels der Rechts-Links-Schraube kann die Spannvorrichtung manuell betätigt werden. Bei einer nach außen gerichteten Bewegung der Spannbacken wird der Werkzeugeinsatz mit der Werkzeugspindel verspannt.

Die Spannpatrone 2 weist einen ersten Kanal 5 und einen zweiten Kanal 7 auf. Die Kanäle 5, 7 verlaufen im Wesentlichen in axialer Richtung von einem ersten Schnittstellenbereich 9 zu einem zweiten Schnittstellebereich 11 der Spannpatrone 2. Der zweite Kanal 7 weist einen kontinuierlichen und strömungstechnisch optimierten Verlauf auf, der beispielsweise mittels eines Sinterverfahrens herstellbar ist.

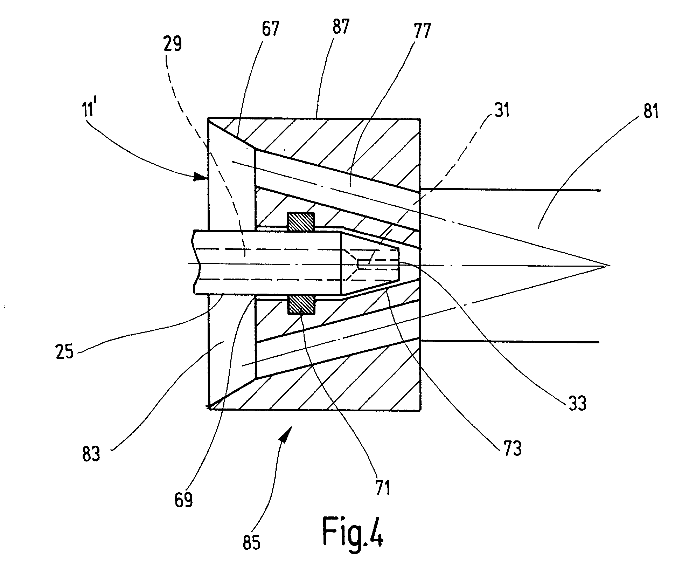

Die an der Stirnseite der Spannpatrone 2 liegenden Schnittstellenbereiche 9, 11 weisen eine erste Ringnut 13 und eine zweite Ringnut 15 auf, die in den Grundkörper der Spannpatrone 2 eingebracht sind und zur Überleitung des Fluids über die Schnittstellenbereiche 9, 11 hinweg dienen. Der Kanal 7 mündet im ersten Schnittstellenbereich 9 in einer zentrischen Bohrung 17, die eine erste Phase 19 und eine zweite Phase 21 und zwei Ringnuten aufweist. Die Phasen 19, 21 dienen als Führung für einen in die Bohrung 17 einführbaren angephasten hier nicht dargestellten Zapfen. Die Ringnuten dienen als Aufnahme für zwei Dichtelemente 23, 23'. Die Dichtelemente 23, 23' sind vorzugsweise als O-Ring ausgeführt und dienen dazu, den Kanal 7, der mittels des hier nicht dargestellten Zapfens über den Schnittstellenbereich 9 hinweggeführt wird, abzudichten. Im zweiten Schnittstellenbereich 11 mündet der Kanal 7 in einen Zapfen 25, der eine Phase 27 und eine zentrische Bohrung 29 aufweist. Die Bohrung 29 verjüngt sich in eine Düsenbohrung 31, die in einer Austrittsöffnung 33 endet. Aufgrund der Düsenbohrung 31 und der Austrittsöffnung 33 bildet der Zapfen 25 eine Düse, die ein unter entsprechendem Druck stehendes Fluid bei dessen Austritt durch die Austrittsöffnung 33 fein verstäubt. Die Austrittsöffnung 33 mündet in einer in Figur 4 näher beschriebenen Misch- und Verwirbelungskammer.

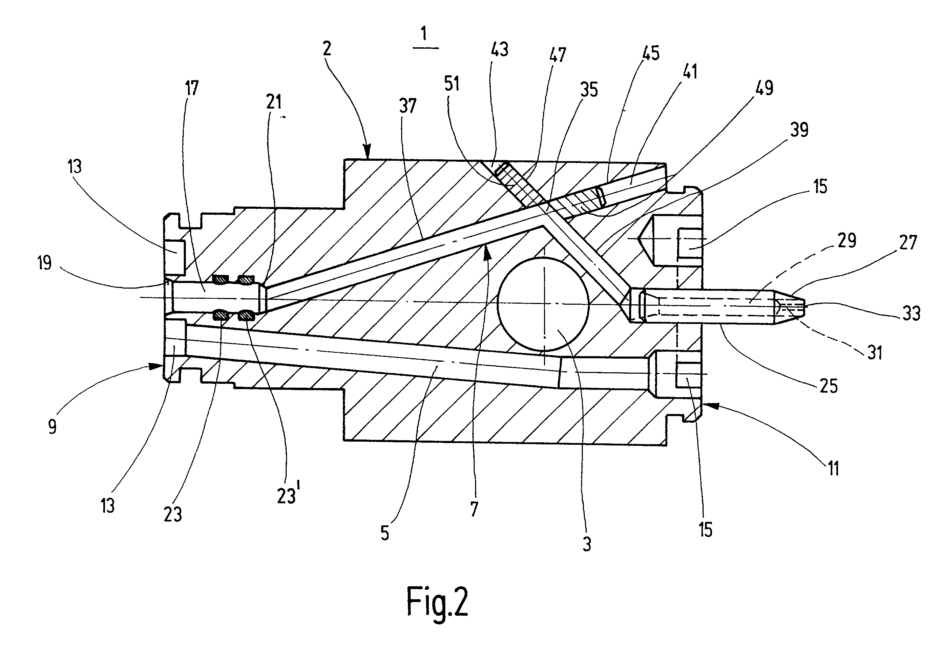

Figur 2 zeigt die in Figur 1 abgebildete Spannpatrone 2 mit einem modifizierten zweiten Kanal 7'. Gleiche Teile sind mit gleichen Bezugziffern versehen, so dass insofern auf die Beschreibung zu Figur 1 verwiesen wird.

Der wesentliche Unterschied zu Figur 1 besteht darin, dass der Kanal 7' keinen kontinuierlichen Verlauf hat und in einem Schnittbereich 35 abgewinkelt ist. In dem hier gezeigten Ausführungsbeispiel weist der Kanal 7' zwei geradlinig verlaufende Teilabschnitte 37, 39 auf. Analog dem in Figur 1 dargestellten Kanal 7 mündet der Teilabschnitt 37 in die Bohrung 17 und der Teilabschnitt 39 in den Zapfen 25. Die Teilabschnitte 37, 39 werden durch eine erste Bohrung 41 und eine zweite Bohrung 43, die sich im Schnittbereich 35 schneiden, gebildet. Die erste Bohrung 41 und die zweite Bohrung 43 weisen zwei weitere Teilabschnitte 45 und 47 auf, die nicht Teil des Kanals 7' sind. Um den Kanal 7' abzudichten, sind die Teilabschnitte 45, 47 mit einem ersten Verschlusselement 49 und einem zweiten Verschlusselement 51 versehen. Die Verschlusselemente 49, 51 sind hier als Gewindestifte angedeutet. Anstelle einer Verschraubung zum Verschließen der Teilabschnitte 45, 47 der ersten Bohrung 41 und der zweiten Bohrung 43 ist es auch denkbar, einen Presssitz, eine Verklebung, eine Verlötung, eine Verschweißung oder ein beliebiges anderes Verschlusselement vorzusehen. Möglich ist es auch für die Verschlusselemente 49 und 51 Materialien mit einem relativ zur Spannpatrone 2 gesehenen, höheren beziehungsweise niedrigeren spezifischen Gewicht vorzusehen, so dass die Verschlusselemente 49 und 51 gleichzeitig als Ausgleichsgewichte für die durch die Kanäle 5 und 7' entstehende Unwucht der Spannpatrone 2 dienen können.

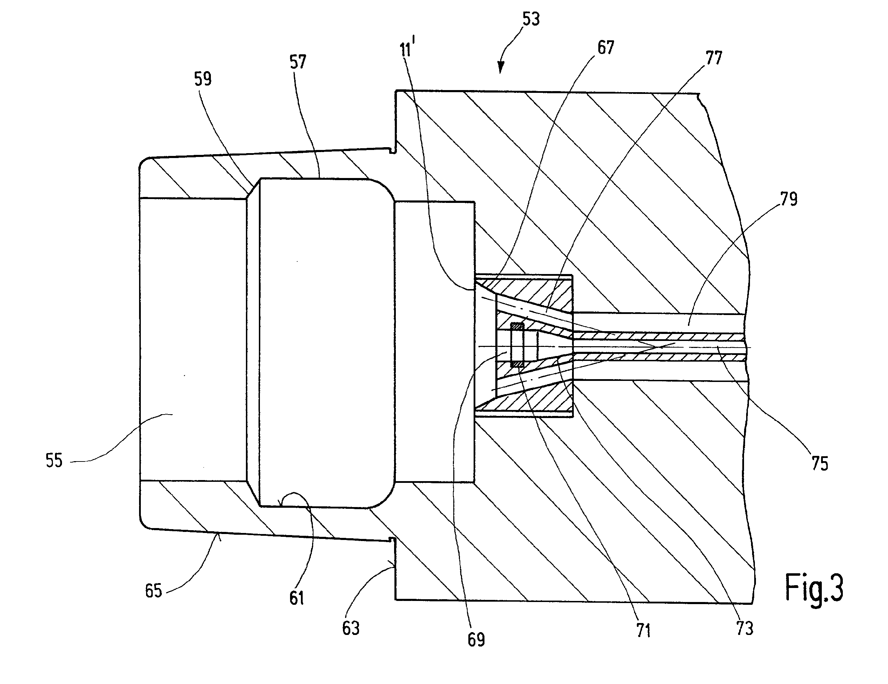

Figur 3 zeigt einen Längsschnitt eines Teils eines Werkzeugeinsatzes 53, nämlich durch den Hohlschaftkegel. Zu erkennen ist eine Bohrung 55 mit einer Spannut 57, die eine Phase 59 aufweist. Die Bohrung 55 dient als Aufnahme für die Spannpatrone 2. Die hier nicht dargestellten Spannbacken der Spannpatrone 2 greifen in die Spannut 57 ein und halten damit den Werkzeugeinsatz 53 an einer Werkzeugspindel. Dazu werden mittels der ebenfalls nicht dargestellten Rechts-Links-Schraube die Spannbacken radial nach außen verlagert, die sich dabei an die Phase 59 und an eine Innenfläche 61 der Spannut 57 anlegen. Mittels des Anlagekontakts der Spannbacken der hier nicht gezeigten Spannpatrone 2 an der Innenfläche 61 und an der als Spannschulter dienende Phase 59 werden durch die radiale Verlagerung der Spannbacken axiale und radiale Spannkräfte aufgebaut. Mittels dieser Spannkräfte wird eine vorzugsweise durchgehende, ringförmige Anlagefläche 63 gegen eine an der hier nicht dargestellten Werkzeugspindel 89 (siehe Figur 4) vorgesehene Anlagefläche 107' gepresst und die konisch verlaufende Außenfläche 65 gegen die konische Innenfläche einer Aufnahmeöffnung in der Werkzeugspindel gepresst. Damit wird der Werkzeugeinsatz mittels der Spannpatrone 2 radial und axial in einer definierten Position fixiert.

Weiter zu erkennen ist ein Schnittstellenbereich 11', der mit dem zweiten Schnittstellenbereich 11 der Spannpatrone 2 zusammenwirkt. Über den zweiten Schnittstellenbereich 11 und den Schnittstellenbereich 11' erfolgt die Weiterführung des ersten Kanals 5 und des zweiten Kanals 7, 7'. Dabei mündet die zweite Ringnut 15 des ersten Kanals 5 in einem Konus 67 des Schnittstellenbereichs 11'. Im zusammengesetzten Zustand bilden der Konus 67 des Schnittstellenbereichs 11' und der Zapfen 25 der Spannpatrone 2 eine Ringnut, die zur Durchführung eines Fluids, das in dem Kanal 5 der Spannpatrone 2 geführt wird, dient. Im montierten Zustand befindet sich der Zapfen 25 der Spannpatrone 2 im Inneren einer Bohrung 69, die eine umlaufende Nut mit einem Dichtelement 71 und eine Phase 73 aufweist. Die Phase 73 dient dabei im Wesentlichen als Gegenlager für die Phase 27 des Zapfens 25 der Spannpatrone 2.

Der Kanal 7, 7' wird damit über den Schnittstellenbereich 11, 11' weitergeführt und mündet in einem inneren Kanal 75 des Werkzeugeinsatzes 53. In diesem Fall dient der Zapfen 25 der Spannpatrone 2 nur zum Weiterführen des Fluids, so dass die Düsenbohrung 31 mit einem entsprechend größeren Durchmesser ausgeführt werden kann. Die Weiterführung des Kanals 5 nach dem Schnittstellenbereich 11' erfolgt über mindestens einen ersten Kanal 77, der in einen zweiten umlaufenden Kanal 79 mündet. Der innere Kanal 75 und der davon getrennte umlaufende Kanal 79 verlaufen konzentrisch in axialer Richtung innerhalb des Werkzeugeinsatzes 53.

Die aus dem inneren Kanal 75 und dem zweiten umlaufenden Kanal 79 bestehende Zweikanalführung mündet in einer hier nicht dargestellten Misch- und Verwirbelungskammer, die sinnvollerweise möglichst dicht an dem Wirkort, also an der Schneide des Werkzeugeinsatzes 53 angebracht ist. In den Kanälen können sowohl Schmiermittel, Kühlmittel wie auch Spülmittel geführt werden. Es ist insbesondere vorteilhafterweise möglich, im inneren Kanal 75 ein flüssiges Medium und im zweiten umlaufenden Kanal 79 gasförmiges Medium zu führen. Es besteht aber auch die Möglichkeit das flüssige Medium im zweiten umlaufenden Kanal zu führen oder zwei gasförmige oder zwei flüssige Medien in den Kanälen zu führen.

Figur 4 zeigt eine Mischvorrichtung 85 als Ausschnittsvergrößerung aus Figur 3 mit dem Zapfen 25 der in den Figuren 1 und 2 dargestellten Spannpatrone 2. Gleiche Teile sind mit gleichen Bezugsziffern versehen, so dass insofern auf die Beschreibung zu den vorangegangenen Figuren verwiesen wird.

Der Schnittstellenbereich 11' ist hier im zusammenmontierten Zustand mit dem Zapfen 25 gezeigt, der im Gegensatz zu Figur 3 in einer Misch- und Verwirbelungskammer 81 mündet. Zu erkennen ist der Zapfen 25, der in die Bohrung 69 eingebracht ist und mittels des beispielsweise als O-Ring ausgebildeten Dichtelements 71 abgedichtet wird. In diesem Ausführungsbeispiel wird über den Kanal 7, 7' vorzugsweise ein flüssiges Medium geführt, das über die Bohrung 29, die sich in die Düsenbohrung 31 verjüngt, und über die Austrittsöffnung 33 in die Misch- und Verwirbelungskammer 81 gelangt. Ein durch den Kanal 5 geführtes gasförmiges Medium gelangt über eine durch den Konus 67 und den Zapfen 25 gebildete Ringnut 83 in den ersten Kanal 77 und von dort schließlich in die Misch- und Verwirbelungskammer 81. Zu erkennen ist, dass der erste Kanal 77 in einem Winkel zu der Düsenbohrung 31 steht, was eine optimale Gemischbildung unterstützt. Der zweite Kanal 77 kann eine Anzahl von Einzelkanälen -beispielsweise zwei- umfassen, die zum Beispiel durch Bohrungen realisiert sind und unter einem spitzen Winkel zur Mittelachse der Mischmutter 87 verlaufen und diese durchdringen. Es ist denkbar, das Medium in dem Kanal 7, 7' mit hohem Druck oder geplustem hohem Druck zu führen, was eine Zerstäubung des flüssigen Fluids an der Austrittsöffnung 33 zur Folge hat. Denkbar ist es auch, die Austrittsöffnung 33 so im Volumenstrom des gasförmigen Mediums zu positionieren, dass das flüssige Medium durch das vorbeiströmende gasförmige Medium -aufgrund des Venturi-Effekts- mitgerissen und dadurch verwirbelt wird.

Das in der Misch- und Verwirbelungskammer entstandene Fluidgemisch, vorzugsweise ein der Minimalmengenschmierung dienendes Luft/Öl-Gemisch, wird über einen beliebigen hier nicht dargestellten Kanal bis zum Wirkort, der Schneide des Werkzeugeinsatzes 53 weitergeführt. Die hier gezeigte Mischvorrichtung 85 kann als Mischmutter 87, die in den Werkzeugeinsatz 53 eingeschraubt wird, ausgeführt oder integraler Bestandteil des Werkzeugs 1 sein. Dabei kommt es nicht darauf an, ob die Mischvorrichtung 85 mit der Mischmutter 87 und der Misch- und Verwirbelungskammer 81 innerhalb des Werkzeugeinsatzes 53 oder innerhalb der Spannpatrone 2 angeordnet ist. Wesentlich ist, dass die Kanäle 5 und 7, 7' über die Schnittstellenbereiche 9, 11, 11' hinwegführbar sind und dass diese unmittelbar am oder nach dem Schnittstellenbereich 11, 11' oder nach einer Weiterführung in dem Werkzeugeinsatz 53 in einer Mischvorrichtung analog der hier dargestellten Mischvorrichtung 85 münden, mittels der die Fluide vermischt werden.

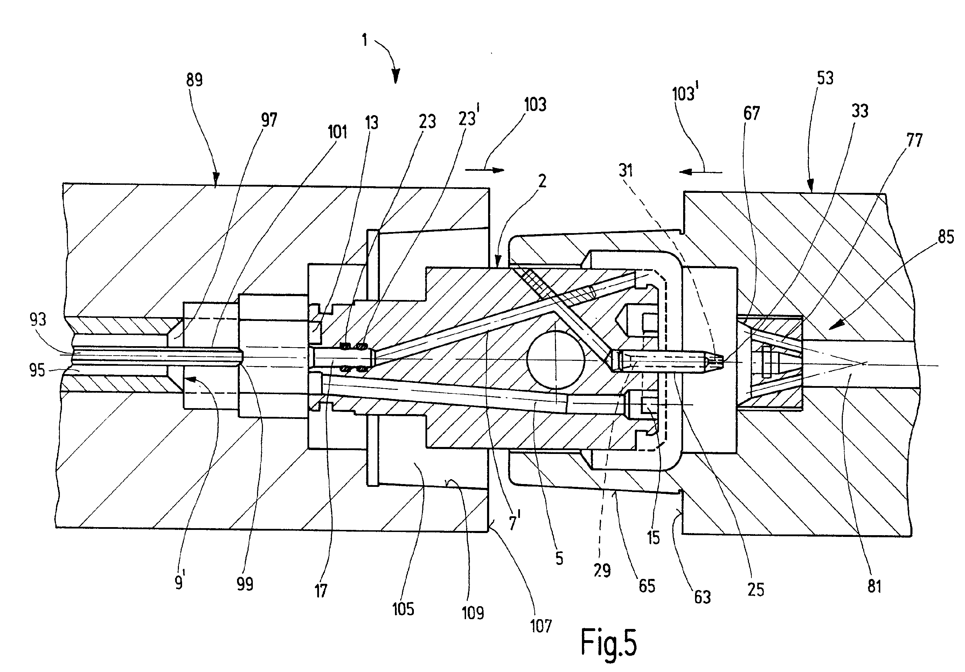

Figur 5 zeigt ein Werkzeug 1 mit einer Werkzeugspindel 89, der Spannpatrone 2 und dem Werkzeugeinsatz 53 in einer Explosionsdarstellung. Hier ist beispielhaft das in Figur 2 dargestellte Ausführungsbeispiel der Spannpatrone 2 wiedergegeben. Gleiche Teile sind mit gleichen Bezugziffern versehen, so dass insofern auf die Beschreibung zu den vorangegangenen Figuren verwiesen wird.

Zu sehen ist die Werkzeugspindel 89 mit einem inneren Fluidkanal 93 und einem äußeren Fluidkanal 95 der in einem Konus 97 mündet. Der innere Kanal 93 wird über einen Schnittstellenbereich 9' als Zapfen 101 mit einer äußeren Phase 99 weitergeführt. Zum Zusammenfügen des Werkzeugs 1 wird die Spannpatrone 2 entgegen der Richtung eines Pfeiles 103 verlagert und beispielsweise mittels einer Bajonettverbindung, die hier nicht näher dargestellt ist, an der Werkzeugspindel 89 in axialer Richtung fixiert. Dabei wird der Zapfen 101 mittels der Phase 99 in die Bohrung 17 eingeführt und mittels der Dichtelemente 23, 23' abgedichtet. Der innere Kanal 93 wird damit über den Schnittstellenbereich 9, 9' hinweggeführt und mündet im Kanal 7'. Der weitere Zusammenbau des Werkzeugs 1 erfolgt durch Verlagern des Werkzeugeinsatzes 53 in Richtung eines Pfeiles 103' und durch Einführen des Hohlschaftkegels mit der Außenfläche 65 in eine konische Ausnehmung 105 der Werkzeugspindel 89, so lange bis eine Anlagefläche 107 der Werkzeugspindel 89 mit der Anlagefläche 63 des Werkzeugeinsatzes in Anlagekontakt steht. Aufgrund der in Figur 3 beschriebenen, hier nicht dargestellten Spannbacken, werden radiale und axiale Klemmkräfte aufgebracht, so dass sich der Hohlschaftkegel im Bereich der Innenfläche 61 aufweitet und eine konische Innenfläche 109 der Werkzeugspindel 89 mit der konischen Außenfläche 65 des Werkzeugeinsatzes 53 in Anlagekontakt gebracht werden. Über die Klemmkräfte und die Anlageflächen 107, 63, 109, 65 ist die Werkzeugspindel 89 über die Spannpatrone 2 und die Bajonettverbindung sicher mit dem Werkzeugeinsatz 53 verbunden.

Zu erkennen ist die sich durch das gesamte Werkzeug 1 erstreckende Zweikanalfluidführung. Dabei setzt sich der umlaufende Kanal 95 in der Werkzeugspindel 89 über den Konus 97 und die erste Ringnut 13 in den ersten Kanal 5 innerhalb der Spannpatrone 2 fort. Dieser Kanal setzt sich über die zweite Ringnut 15 und den Konus 67 in den ersten Kanal 77 der Mischvorrichtung 85 fort. Er mündet damit in die Misch- und Verwirbelungskammer 81 der Mischvorrichtung 85. Betrachtet man das Ausführungsbeispiel gemäß Figur 3 des Werkzeugeinsatzes 53, so zeigt sich, dass der erste Kanal 5 sich über die zweite Ringnut 15 und den Konus 67 in den zweiten umlaufenden Kanal 79 innerhalb des Werkzeugeinsatzes 53 fortsetzt.

Innerhalb des Werkzeugs 1 gibt es noch eine getrennte zweite Kanalführung, die den inneren Kanal 93 innerhalb der Werkzeugspindel 89 umfasst. Dieser wird über den Zapfen 101, der in die Bohrung 17 der Spannpatrone 2 eingreift, in den zweiten Kanal 7' fortgeführt. Bei dem in Figur 5 dargestellten Ausführungsbeispiel setzt sich der zweite Kanal 7' über den Zapfen 25 bis in die Mischvorrichtung 85 in dem Werkzeugeinsatz 53 fort. Auch hier ist es möglich, dass der zweite Kanal 7' über den Zapfen 25 in den inneren Kanal 75 im Inneren des Werkzeugeinsatzes 53 übergeht, der aus Figur 3 ersichtlich ist.

Insgesamt ist erkennbar, dass das Werkzeug 1 eine getrennte Zweikanalfluidführung aufweist, die bereits in der Werkzeugspindel 89 vorgesehen ist und sich durch die Spannpatrone 2 erstreckt. Es ist außerdem möglich, die getrennte Zweikanalfluidführung auch im Inneren des Werkzeugeinsatzes 53 vorzusehen, um unterschiedliche Medien, beispielsweise Öl und Luft, bis unmittelbar an den Wirkort, nämlich bis an die Schneide eines Werkzeugs heranzuführen.

Bei den hier dargestellten Ausführungsbeispielen ist im Bereich der verschiedenen Schnittstellen jeweils ein zentrischer Zapfen vorgesehen, der eine Relativdrehung der den Schnittstellen zugeordneten Teilen ermöglicht, außerdem das Zusammenführen der Werkzeugteile erleichtert.

Der hier erwähnte Werkzeugeinsatz 53 kann auf seiner Außenseite mindestens eine Schneide beziehungsweise Messerplatte aufweisen, also als Werkzeugkopf ausgebildet sein. Es ist aber auch möglich, dass der Werkzeugeinsatz als Zwischenstück beziehungsweise Verlängerung oder Adapter ausgebildet ist. In allen Fällen ist es möglich, auch bei längeren Werkzeugen eine getrennte Zweikanalfluidführung vorzusehen. Damit kann auch bei langen Werkzeugen eine Entmischung beziehungsweise Versackung auch dann vermieden werden, wenn eine sogenannte Minimalmengenschmierung realisiert wird.

Die im Bereich der Schnittstellen vorgesehene Ringnut muss nicht unbedingt durchgehend ausgebildet sein. Sie dient dazu, die um den Zapfen herumgeführte Fluidmenge so zu verteilen, dass eine optimale Fluidführung realisierbar ist.

Aus den Erläuterungen wird deutlich, dass das Werkzeug zwei getrennte Fluidkanäle aufweist, die insbesondere auch im Bereich der Spannpatrone vorgesehen sind. Diese baut dennoch sehr klein und kompakt, so dass auch bei Werkzeugen mit kleinem Durchmesser die Zweikanalfluidführung ohne weiteres realisierbar ist. Es ist sogar möglich, bestehende mechanisch verriegelbare Spannpatronen nachträglich mit einem zweiten Fluidkanal zu versehen, um eine getrennte Fluidführung für die Minimalmengenschmierung vorzusehen. Durch die Fluidkanäle werden vorzugsweise zum einen Druckluft und zum anderen ein flüssiges Kühl-/Schmiermittel geleitet, um insbesondere eine Minimalmengenschmierung zu realisieren.

Im Folgenden wird auf ein Verfahren zur Herstellung des Kanals 7', der in der Spannpatrone 2 verläuft, eingegangen. Hierzu wird auf die Figur 2 Bezug genommen.

Der Kanal 7' wird in zwei Verfahrensschritten hergestellt: Im ersten Schritt erfolgt das Bohren von Teilkanälen und im zweiten Schritt werden Teile der Bohrungen wieder verschlossen. Zur Erstellung des Kanals 7' werden dazu in die Spannpatrone 2 zumindest die zwei sich im Schnittbereich 35 schneidenden Bohrungen 41, 43 eingebracht. Der Kanal 7' verläuft im Teilabschnitt 37 der ersten Bohrung 41, zweigt im Schnittstellenbereich 35 ab und verläuft weiter im Teilabschnitt 39 der zweiten Bohrung 43. Nach dem Bohren ist der Kanal 7' am Schnittstellenbereich 35 der Bohrungen 41, 43 über diese zweifach nach außen geöffnet.

Im zweiten Prozessschritt werden diese zwei Öffnungen durch die Verschlusselemente 49, 51 mittels einer Verschraubung, eines Presssitzes, einer Verklebung, einer Verlötung, einer Verschweißung oder eines beliebigen Verschlusselements wieder verschlossen. Dadurch entsteht letztlich im Inneren der Spannpatrone 2 der nach außen abgedichtete Kanal 7'. Die Lage der Bohrungen 41, 43 ist dabei vorzugsweise so zu wählen, dass das jeweilige Ende der Bohrungen 41, 43 auf der Mittelachse der Spannpatrone 2 liegt. Ein durchgehender Kanal 7' kann dann mittels zwei weiterer zentrischer Bohrungen, die jeweils die Enden der Bohrungen 41, 43 treffen, realisiert werden. In Figur 2 sind dies die Bohrung 17 und eine Bohrung, in die der Zapfen 25 eingebracht ist. Dies ergibt einen im Inneren der Spannpatrone 2 verlaufenden Kanal 7', der dreifach an den jeweiligen Schnittpunkten der Bohrungen 17, 41, 43 und der Bohrung in die der Zapfen 25 eingebracht ist, abgeknickt ist und der um die Bohrung 3 herumgeführt ist, die der Aufnahme der Spannschraube für die Spannbacken dient.

Die Herstellung zweier getrennter Kanäle im Inneren der Spannpatrone 2 ist auch im Wege eines Sinterverfahrens möglich. Es zeigt sich, dass letztlich auch auf einfache Weise zwei getrennte Kanäle realisiert werden können, mittels derer ein gasförmiges und ein flüssiges Medium bis nahe an den Wirkort, nämlich bis zur Schneide eines Werkzeugs führbar sind. Dabei ist der Herstellungsaufwand übersehbar, so dass die Kosten für das Werkzeug niedrig gehalten werden können. Im Übrigen bleibt der Aufbau des Werkzeugs einfach und störungsunanfällig.

## Patentansprüche

1. Werkzeug mit einem Werkzeugeinsatz (53) zur spanenden Bearbeitung von Werkstücken, mit einer für den manuellen Werkzeugwechsel ausgelegten Spannpatrone (2) zum Festspannen des Werkzeugeinsatzes (53) in einer Werkzeugspindel (89), mit mindestens einem das Werkzeug (1), insbesondere die Spannpatrone (2) im Wesentlichen in axialer Richtung durchdringenden Kanal für Medien, insbesondere für Kühl- und/oder Spül- und/oder Schmiermittel, **dadurch gekennzeichnet, dass** ein von einem ersten Kanal (5) getrennter, im Wesentlichen in axialer Richtung verlaufender zweiter Kanal (7;7') für Medien, insbesondere für Kühl- und/oder Spülund/oder Schmiermittel in der Spannpatrone (2) vorgesehen ist, und dass in den Kanälen (5) und (7;7') unterschiedliche Medien führbar sind und diese in einer Mischvorrichtung (85) münden.

2. Werkzeug nach Anspruch 1, **dadurch gekennzeichnet, dass** der zweite Kanal (7;7') im Werkzeugeinsatz (53) weitergeführt wird.

3. Werkzeug nach Anspruch 1 oder 2, **dadurch gekennzeichnet, dass** die Spannpatrone (2) mindestens einen vorzugsweise zentrisch angeordneten Zapfen (25,101) und/oder mindestens eine umlaufende Ringnut (13,15) aufweisen, die zum Weiterführen der Kanäle (5) und (7;7') über den ersten Schnittstellenbereich (9,9') der Werkzeugspindel lenbereich (9,9') der Werkzeugspindel (89) und Spannpatrone (2) und/oder den zweiten Schnittstellenbereich (11,11') der Spannpatrone (2) und Werkzeugeinsatz (53) dienen.

4. Werkzeug nach einem der vorhergehenden Ansprüche, **dadurch gekennzeichnet, dass** der zweite Kanal (7) zumindest teilweise entlang einer geschwungenen Bahn verläuft.

5. Werkzeug nach einem der vorhergehenden Ansprüche, **dadurch gekennzeichnet, dass** ein Teil des zweiten Kanals (7') aus zwei in einem Winkel zueinander verlaufenden Bohrungen (41,43) gebildet wird.

6. Werkzeug nach einem der vorhergehenden Ansprüche, **dadurch gekennzeichnet, dass** die Mischvorrichtung (85) am Ende der Kanäle (5) und (7;7') eine Misch- und Verwirbelungskammer (81) aufweist.

7. Werkzeug nach einem der vorhergehenden Ansprüche, **dadurch gekennzeichnet, dass** die Mischvorrichtung (85) eine Mischmutter (87) und eine Misch- und Verwirbelungskammer (81) und einen als Düse dienenden Zapfen (25) aufweist.

8. Werkzeug nach einem der vorhergehenden Ansprüche, **dadurch gekennzeichnet, dass** der Werkzeugeinsatz (53) oder die Spannpatrone (2) die Mischvorrichtung (85) aufweist oder dass eine Mischvorrichtung aus Teilen, die die Spannpatrone (2) und/oder der Werkzeugeinastz (53) aufweisen gebildet wird.
